# EUROPÄISCHE PATENTSCHRIFT

(11) **EP 2 193 338 B1**
(45) Veröffentlichungstag und Bekanntmachung des Hinweises auf die Patenterteilung: **02.12.2015**
(21) Anmeldenummer: 08804031.6
(22) Anmeldetag: 11.09.2008
(51) Int. Cl.: G01C 21/32

(54) **SICHERHEITSKRITISCHE KARTENAKTUALISIERUNG ÜBER EINEN DATENKANAL EINES SATELLITENNAVIGATIONSSYSTEMS**
SAFETY-CRITICAL UPDATING OF MAPS VIA A DATA CHANNEL OF A SATELLITE NAVIGATION SYSTEM
MISE À JOUR CRITIQUE DE SÉCURITÉ D'UNE CARTE VIA UNE VOIE DE DONNÉES D'UN SYSTÈME DE NAVIGATION PAR SATELLITES

(30) Priorität: 13.09.2007 DE 102007043825; 11.09.2008 DE 102008046896
(43) Veröffentlichungstag der Anmeldung: 09.06.2010
(73) Patentinhaber: Continental Teves AG & Co. OHG, 60488 Frankfurt (DE)
(72) Erfinder: STÄHLIN, Ulrich, Eschborn (DE); MENZEL, Marc, 35043 Marburg (DE); NEUMANN, Karl-Thomas, 61479 Glashütten (DE)
(74) Vertreter: Bonn, Roman Klemens
(86) Internationale Anmeldenummer: PCT/EP2008/062066
(87) Internationale Veröffentlichungsnummer: WO 2009/037186

(56) Entgegenhaltungen:
- DE-A1- 19 842 430
- US-A1- 2007 016 361

## Beschreibung

### Gebiet der Erfindung

Die Erfindung betrifft die Navigations- und Assistenztechnik für Fahrzeuge. Insbesondere betrifft die Erfindung eine Aktualisierungseinrichtung für ein Aktualisierungssystem zur Aktualisierung einer digitalen Karte eines Fahrzeugs sowie ein Aktualisierungssystem zur Aktualisierung einer digitalen Karte aufweisend eine Zentrale und eine Aktualisierungseinrichtung.

### Technologischer Hintergrund

Die rasante Zunahme des Fahrzeugverkehrs auf den Straßen und die damit verbundenen Staus und Fahrzeitverlängerungen führen weltweit zu erhöhten Anstrengungen, Verkehrszustände zu erkennen und diese bei einer Routenwahl bzw. einer Routenberechnung in Navigationssystemen zu berücksichtigen. Auch können diese Verkehrszustände in Fahrerassistenzsystemen berücksichtigt werden.

Digitale Karten, welche für Navigationssysteme und Fahrerassistenzsysteme Verwendung finden, sind meist schon bei ihrer Auslieferung veraltet. Von daher ist eine Aktualisierung (Update) der Karte unerlässlich, wenn die digitale Karte mit den aktuellen Verhältnissen übereinstimmen soll. Eine solche Aktualisierung erfolgt in der Regel über den Vertrieb von Speichermedien, auf denen die Aktualisierungsdaten gespeichert sind.

Weiterhin ist aus der Patentanmeldung DE19842430 A1 bekannt, Aktualisierungsdaten individuell oder über eine Rundfunkstation zur Verfügung zu stellen, wofür auch ein Satellit verwendet werden kann.

Über einen sog. Traffic Message Channel (TMC) können gleichzeitig zu den Radioprogrammen, unhörbar, codierte Verkehrsmeldungen gesendet werden. Mit TMC kann man allerdings immer nur ein begrenztes Gebiet abdecken, da die Reichweite von Radiosignalen begrenzt ist.

### Zusammenfassung der Erfindung

Es ist eine Aufgabe der Erfindung, eine verbesserte Bereitstellung von Aktualisierungsdaten für eine digitale Karte anzugeben.

Die Erfindung betrifft eine Aktualisierungseinrichtung gemäß dem unabhängigen Anspruch 1 sowie ein Aktualisierungssystem aufweisend eine derartige Aktualisierungseinrichtung und eine Zentrale.

Weiterbildungen der Erfindung ergeben sich aus den abhängigen Ansprüchen.

Die beschriebenen Ausführungsbeispiele betreffen gleichermaßen die Zentrale, die Aktualisierungseinheit, das Aktualisierungssystem, die Verwendung, das Verfahren, das Computerprogrammprodukt und das computerlesbare Medium.

Gemäß einem Ausführungsbeispiel der Erfindung ist eine Zentrale für ein Aktualisierungssystem eines Fahrzeugs zur Aktualisierung einer digitalen Karte angegeben, wobei die Zentrale eine erste Kommunikationseinheit zur Übermittlung von Aktualisierungsdaten über einen Datenkanal eines Satellitennavigationssystems an eine zweite Kommunikationseinheit einer Aktualisierungseinheit in dem Fahrzeug aufweist, wobei die zweite Kommunikationseinheit zum Empfang der Aktualisierungsdaten ausgeführt ist und wobei die Aktualisierungseinheit zur Aktualisierung der digitalen Karte auf Basis der empfangenen Aktualisierungsdaten ausgeführt ist.

### In anderen Worten können über die Zentrale digitale Karten von

Fahrzeugnavigationssystemen oder Fahrerassistenzsystemen teilweise oder auch vollständig aktualisiert werden, indem die Aktualisierungsdaten von der Zentrale über einen oder mehrere Satelliten an das entsprechende Fahrzeug gesendet werden. Der Satellit sendet hierbei wie ein GPS-Satellit Positionsangaben. Zusätzlich werden die Aktualisierungsdaten gesendet.

Die von den Satelliten ausgestrahlten Daten (Positionsangaben sowie die Aktualisierungsdaten) werden von allen Fahrzeugen empfangen, deren Kommunikationseinheiten auf die entsprechenden Satelliten eingestellt sind. Auf diese Weise können die relevanten Informationen sehr schnell an eine große Bevölkerungsmasse weltweit weitergegeben werden.

Unter dem Begriff "digitale Karten" sind auch Karten für fortschrittliche Fahrerassistenzsysteme (ADAS, Advanced Driver Assistance System) zu verstehen, ohne dass eine Navigation stattfindet.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

Gemäß einem weiteren Ausführungsbeispiel der Erfindung handelt es sich bei dem für die Übermittlung der Aktualisierungsdaten verwendeten Datenkanal um einen Subkanal eines Hauptdatenkanals des Satellitennavigationssystems. So werden einerseits auf dem Hauptkanal die Positionsangaben gesendet. Auf dem Subkanal oder Nebenkanal werden, unabhängig von den gesendeten Positionsangaben, die Aktualisierungsdaten gesendet. Diese Aktualisierungsdaten werden beispielsweise von der Zentrale in die entsprechenden Satelliten eingespeist bzw. an die entsprechenden Satelliten gesendet.

### Gemäß einem weiteren Ausführungsbeispiel der Erfindung ist das

Satellitennavigationssystem das Satellitennavigationssystem Galileo. Das Satellitennavigationssystem Galileo der Europäischen Union bietet die Möglichkeit zusätzlicher Datenkanäle, die dazu verwendet werden können, Kartenupdates oder andere Aktualisierungsdaten zu versenden.

Bei den Aktualisierungsdaten handelt es sich beispielsweise um sicherheitskritische Daten.

Sicherheitskritische Daten im Sinne der vorliegenden Erfindung sind Daten, welche eine große Auswirkung auf viele Teilnehmer haben. Beispiele für solche sicherheitskritische Daten, sicherheitskritische Updates bzw. sicherheitskritische dynamische Informationen sind Naturkatastrophen, wie Vulkanausbrüche, Tropenstürme, Hurrikans, Erdrutsche, Sturmfluten oder Waldbrände. Ein weiteres Beispiel sind eingestürzte Brücken. Auch können die Aktualisierungsdaten Informationen über Gefahrengute in der Luft oder auf der Fahrbahn, z. B. durch einen verunglückten Gefahrguttransporter oder Unfälle auf Fabrikgeländen, aufweisen. Auch können auf diese Weise Informationen über Großbrände, Massenkarambolagen auf Schnellstraßen oder Autobahnen oder aber auch nahende Katastrophen, wie beispielsweise ein Tsunami, übermittelt werden.

Gemäß einem Ausführungsbeispiel der Erfindung handelt es sich bei den Aktualisierungsdaten um dynamische Daten. Unter dem Begriff "dynamische Daten" sind beispielsweise Orte von Interesse (Points of Interest, POIs) zu verstehen, welche mit der digitalen Karte verknüpft sind.

Diese Orte von Interesse können zur Abbildung von Änderungen der Kartendaten verwendet werden. Beispielsweise können diese Orte von Interesse nach Empfang in der Aktualisierungseinheit auf einem anderen Medium bzw. einem anderen Gerät gespeichert sein, wie die digitalen Kartendaten an sich. Auf diese Weise ist es möglich, eine Kartenaktualisierung durchzuführen, ohne dabei die Originaldaten der digitalen Karte zu verändern.

Bei den dynamischen Orten von Interesse handelt es sich beispielsweise um GEO-referenzierte Punkt-Objekte, die zur Darstellung ortsabhängiger Informationen verwendet werden. Die Orte von Interesse können von dem System auf einer ortsbezogenen Karte ein- oder ausgeblendet werden. Die Darstellung der Orte von Interesse ist hierbei dynamisch. Dies bedeutet, dass die dynamischen Orte von Interesse vom Benutzer oder vom System erstellt, gelöscht oder geändert werden.

Gemäß einem weiteren Ausführungsbeispiel der Erfindung ist die Zentrale zur Übermittlung der Aktualisierungsdaten an bestimmte, ausgewählte Zellen ausgeführt.

Beispielsweise können die Aktualisierungsdaten mit einer bestimmten Kennung oder einer bestimmten Verschlüsselung versehen sein, so dass der entsprechende Empfänger erkennt, ob die Daten für ihn vorgesehen sind oder nicht.

Auch kann es, wie bei TMC, eine feste Anzahl an Zellen geben, die über eine feste, definierte und einheitliche Identifikationsnummer angesprochen werden können. Ein Vorteil dieses Vorgehens ist die geringe notwendige Bandbreite. Je nach Größe der Zellen ergibt sich die erzielte örtliche Auflösung.

In anderen Worten kann die digitale Karte in eine Vielzahl von Zellen und/oder möglichen Straßensegmenten zerlegt werden. Die Aktualisierungsdaten werden an alle Empfänger übermittelt. Hierbei wird mit den Aktualisierungsdaten eine Information mitgesendet, welches Straßensegment bzw. welche Zelle von dieser Aktualisierung betroffen ist.

Gemäß einem weiteren Ausführungsbeispiel der Erfindung ist die Zentrale zur Übermittlung der Aktualisierungsdaten für ein bestimmtes örtliches Gebiet mittels einer Adressierungsfunktion ausgeführt.

Die Adressierungsfunktion basiert beispielsweise auf einem NMEA-String. Bei NMEA handelt es sich um eine Vereinigung von Elektronikherstellern und -händlern in der Schifffahrtsindustrie (National Marine Electronics Association).

In anderen Worten wird der Ort der Aktualisierung als NMEA-String oder dergleichen angegeben. Ein Vorteil hierbei ist die große Genauigkeit der Positionsinformation.

Gemäß einem weiteren Ausführungsbeispiel der Erfindung ist die Zentrale zur Komprimierung der Aktualisierungsdaten vor der Übermittlung ausgeführt. Auf diese Weise kann die Menge an den zu übertragenden Daten reduziert werden, wodurch die Aktualisierungsgeschwindigkeit erhöht werden kann.

Gemäß einem weiteren Ausführungsbeispiel der Erfindung ist die Zentrale zum andauernden Übermitteln der Aktualisierungsdaten ausgeführt.

Wenn es sich um große Datenmengen handelt, kann die Übertragung der Aktualisierungsdaten tage- oder sogar wochenlang andauern. In diesem Fall hören die Aktualisierungseinheiten in den Empfängern auch im Standby-Betrieb diesen Datenstrom mit.

Gemäß einem weiteren Ausführungsbeispiel der Erfindung ist die Zentrale zur regionalen Übermittlung der Aktualisierungsdaten über einen bestimmten, ausgewählten Satelliten ausgeführt. Es können auch mehrere Satelliten ausgewählt werden.

Auf diese Weise ist es möglich, dass die Aktualisierungsdaten nur an Empfänger in einem bestimmten, regionalen Gebiet, wie beispielsweise Zentraleuropa, übermittelt werden.

Gemäß einem weiteren Ausführungsbeispiel der Erfindung sind die Aktualisierungsdaten ausgewählt aus der Gruppe umfassend sicherheitskritische Informationen und längerfristig bekannte Änderungen im Straßenverlauf und Straßeneigenschaften.

### Gemäß einem weiteren Ausführungsbeispiel der Erfindung ist eine

Aktualisierungseinrichtung für ein Aktualisierungssystem eines Fahrzeugs zur Aktualisierung einer digitalen Karte angegeben, wobei die Aktualisierungseinrichtung eine zweite Kommunikationseinheit in dem Fahrzeug zum Empfang von Aktualisierungsdaten von einer ersten Kommunikationseinheit einer Zentrale über einen Datenkanal eines Satellitennavigationssystems aufweist. Weiterhin weist die Aktualisierungseinrichtung eine Aktualisierungseinheit zur Aktualisierung der digitalen Karte auf Basis der empfangenen Aktualisierungsdaten auf.

Eine solche Aktualisierungseinrichtung kann in ein Fahrzeug eingebaut werden.

Gemäß einem weiteren Ausführungsbeispiel der Erfindung ist die Aktualisierungseinrichtung zum ständigen Empfang der Aktualisierungsdaten auch in einem Standby-Betrieb ausgeführt. Auf diese Weise können große Datenmengen über einen längeren Zeitpunkt empfangen werden, ohne dass die Aktualisierungseinrichtung ständig voll funktionsfähig sein muss.

Gemäß einem weiteren Ausführungsbeispiel der Erfindung ist ein Aktualisierungssystem zur Aktualisierung einer digitalen Karte für ein Fahrzeug angegeben, welches eine oben beschriebene Zentrale mit einer ersten Kommunikationseinheit und eine oben beschriebene Aktualisierungseinrichtung mit einer zweiten Kommunikationseinheit aufweist, wobei die erste Kommunikationseinheit der Zentrale zur Übermittlung von Aktualisierungsdaten über einen Datenkanal eines Satellitennavigationssystems an die zweite Kommunikationseinheit der Aktualisierungseinrichtung in dem Fahrzeug ausgeführt ist. Die zweite Kommunikationseinheit ist hierbei zum Empfang der Aktualisierungsdaten ausgeführt, wobei die Aktualisierungseinheit zur Aktualisierung der digitalen Karte auf Basis der empfangenen Aktualisierungsdaten ausgeführt ist.

Gemäß einem weiteren Ausführungsbeispiel der Erfindung ist die Verwendung einer oben beschriebenen Zentrale zur Aktualisierung einer digitalen Karte eines Fahrzeugs angegeben.

Gemäß einem weiteren Ausführungsbeispiel der Erfindung ist ein Verfahren zur Aktualisierung einer digitalen Karte für ein Fahrzeug angegeben, bei welchem Aktualisierungsdaten über einen Datenkanal eines Satellitennavigationssystems von einer Zentrale an eine zweite Kommunikationseinheit einer Aktualisierungseinrichtung in dem Fahrzeug übermittelt werden, die Aktualisierungsdaten in dem Fahrzeug empfangen werden und eine Aktualisierung der digitalen Karte auf Basis der empfangenen Aktualisierungskarten durchgeführt wird.

### Gemäß einem weiteren Ausführungsbeispiel der Erfindung ist ein

Computerprogrammprodukt angegeben, das, wenn es auf einem Prozessor ausgeführt wird, den Prozessor anleitet, die oben angegebenen Verfahrensschritte durchzuführen.

Gemäß einem weiteren Ausführungsbeispiel der Erfindung ist ein computerlesbares Medium angegeben, auf dem ein Computerprogrammprodukt gespeichert ist, das, wenn es auf einem Prozessor ausgeführt wird, den Prozessor anleitet, die oben angegebenen Verfahrensschritte auszuführen.

Eine grundsätzliche Überlegung der Erfindung liegt darin, dass ein Datenkanal eines Satellitennavigationssystems dazu verwendet wird, sicherheitskritische Kartenupdates zu versenden. Durch die Verwendung der Datenkanäle von beispielsweise Galileo für sicherheitskritische Kartenupdates bzw. sicherheitskritische dynamische Informationen kann sehr schnell eine große Bevölkerungsmasse weltweit mit diesen Informationen erreicht werden.

Im Folgenden werden mit Verweis auf die Figuren bevorzugte Ausführungsbeispiele der Erfindung beschrieben.
Fig. 1 zeigt eine schematische Darstellung einer Aktualisierungseinrichtung gemäß einem Ausführungsbeispiel der Erfindung.
Fig. 2 zeigt eine schematische Darstellung eines Gesamtsystems gemäß einem Ausführungsbeispiel der Erfindung.
Fig. 3 zeigt ein Flussdiagramm eines Verfahrens gemäß einem Ausführungsbeispiel der Erfindung.

Die Darstellungen in den Figuren sind schematisch und nicht maßstäblich.

In der folgenden Figurenbeschreibung werden für die gleichen oder ähnlichen Elemente die gleichen Bezugsziffern verwendet.

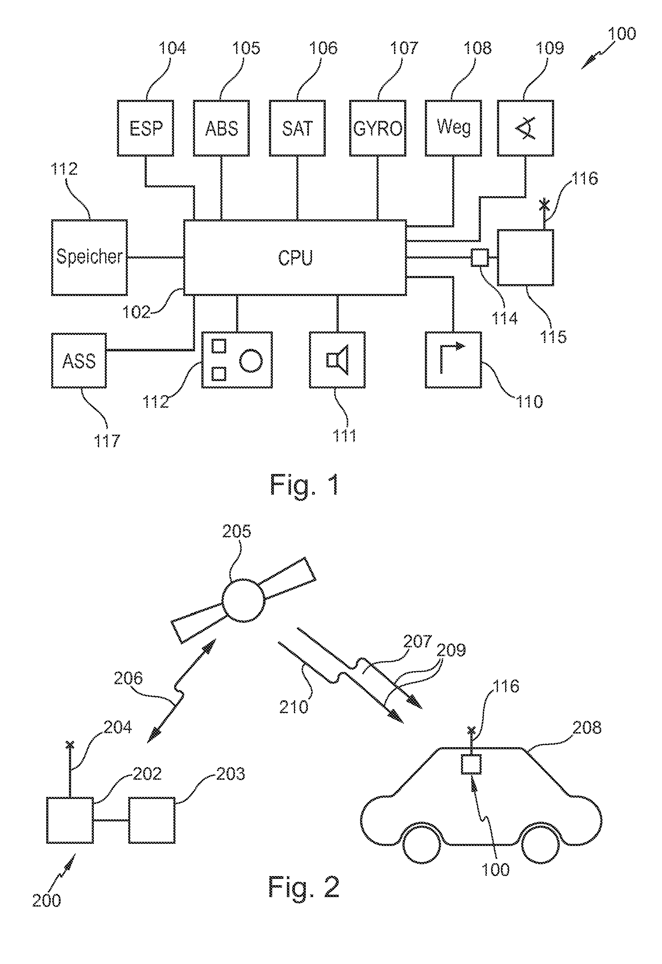

Fig. 1 zeigt eine schematische Darstellung von Komponenten einer Aktualisierungseinrichtung gemäß einem Ausführungsbeispiel der Erfindung. Die Aktualisierungseinrichtung 100 ist beispielsweise in einem Fahrzeug installiert und dient der Aktualisierung einer digitalen Navigationskarte. Die Aktualisierungseinrichtung 100 weist ein Steuergerät (CPU) 102 auf, welches zumindest teilweise eine Aktualisierungseinheit ausbildet.

Mit dem Steuergerät 102 ist eine Eingabeeinheit 112 verbunden. Über die Eingabeeinheit 112 können verschiedene Einstellungen der Aktualisierungseinrichtung vorgenommen werden und beispielsweise für eine Navigationseinheit der Aktualisierungseinrichtung ein Zielort und ggf. auch ein Standort gewählt werden. Die Eingabe des Zielortes ist dabei beispielsweise durch Eingabe des vollständigen Namens des Zielortes oder auch durch eine Auswahl aus einer Liste, die auf einer optischen Ausgabeeinheit, wie beispielsweise einem Monitor 110, dargestellt wird, möglich. Auf dem Monitor 110 werden auch die Zielführungsinformationen ausgegeben. Darüber hinaus können die Zielführungsinformationen auch über eine akustische Ausgabeeinheit 111 ausgegeben werden. Die Ausgabe über die akustische Ausgabeeinheit 111 hat den Vorteil, dass der Fahrer weniger vom aktuellen Verkehrsgeschehen abgelenkt wird. In einem Speicherelement 113, das mit der zentralen Recheneinheit (Steuereinheit) 102 verbunden ist oder in der Steuereinheit integriert ist, sind die Landkartendaten (Navigationskartendaten) in Form von Datensätzen abgelegt. Beispielsweise sind in dem Speicherelement 113 auch zusätzliche Informationen über Verkehrsbeschränkungen und dergleichen abgelegt und den Datensätzen zugeordnet.

Weiterhin ist ein Fahrerassistenzsystem 117 vorgesehen, welches mit den Aktualisierungsdaten versorgt wird.

Zur Bestimmung der aktuellen Fahrzeugposition weist die Aktualisierungseinrichtung 100 eine Navigationseinheit mit einem Satellitennavigationsempfänger 106 auf, der zum Empfang von Navigations-Signalen von beispielsweise Galileo-Satelliten ausgelegt ist. Natürlich kann die Navigationseinheit mit dem Satellitennavigationsempfänger 106 auch für andere Satellitennavigationssysteme ausgeführt sein, sofern diese einen zusätzlichen Datenkanal für die Übermittlung der Aktualisierungsdaten bereitstellen.

Da die Navigations-Signale beispielsweise im innerstädtischen Bereich nicht immer empfangbar sind, weist die Aktualisierungseinrichtung zur Durchführung einer Koppelnavigation zudem einen Richtungssensor 107, einen Wegstreckensensor 108 und ggf. auch einen Lenkradwinkelsensor 109 auf. Signale des Empfängers 106, des Wegstreckensensors und des Richtungssensors sowie des Lenkradwinkelsensors werden beispielsweise in dem zentralen Steuergerät 102 bearbeitet. Die aus diesen Signalen ermittelte Fahrzeugposition wird über Map Matching mit den Straßenkarten abgeglichen. Die so gewonnene Zielführungsinformation wird über den Monitor 110 schließlich ausgegeben.

Da die Navigationskartendaten normalerweise statisch und daher schnell veraltet sind, können diese Kartendaten erfindungsgemäß immer auf dem neuesten Stand gehalten werden.

Das Fahrerassistenzsystem 117 benötigt die Aktualisierungsdaten und die digitalen Kartendaten, um dem Fahrer bei der Steuerung des Fahrzeugs, beispielsweise bei der Geschwindigkeitsbestimmung oder der Einstellung des Kurvenlichts, zu helfen. Beispiele für ein Fahrerassistenzsystem sind Traktionskontrolle, wie ABS (Anti-Blockier-System) 105, ASR (Antriebs-Schlupf-Regelung), ESP (Elektronisches Stabilitätsprogramm, kann auch Antriebs-Schlupf-Regelung beinhalten) 104 oder EDS (Elektronische Differentialsperre). Weiterhin kann das Fahrerassistenzsystem zur Steuerung des Lichtes (adaptives Kurvenlicht, Ein- und Ausschalten des Fahrlichts, Fernlichtassistent, Nachrichtensystem, etc.) vorgesehen sein. Zusätzlich oder alternativ dazu kann das Fahrerassistenzsystem zusätzlichen Komfort und Sicherheit bereitstellen, beispielsweise durch einen Tempomat oder einen Abstandsregeltempomat ACC (Adaptive Cruise Control), eine Einparkhilfe mit beispielsweise Ultraschallsensoren zur Hindernis- und Abstandserkennung, einen Bremsassistenten, oder einen Abstandswarner.

Weiterhin ist eine Kommunikationseinheit 115 mit einer Antenne 116 zum Empfang der Aktualisierungsdaten vorgesehen. Über die Kryptographieeinheit 114 können empfangene Daten entschlüsselt und zu sendende Daten verschlüsselt werden. Auf diese Weise kann die Gefahr eines Missbrauchs vermieden werden.

Insbesondere können der Positionsempfänger und der Datenempfänger als ein Gerät aufgeführt sein bzw. zumindest eine (gemeinsame) Antenne aufweisen.

Fig. 2 zeigt eine schematische Darstellung eines Gesamtsystems, welches einen Empfänger 208 mit einer Aktualisierungseinrichtung 100, eine Zentrale 200 sowie einen oder mehrere Satelliten 205 aufweist.

Die Zentrale 200 weist eine Kommunikationseinheit 202 mit einer entsprechenden Antenne 204 sowie einen zentralen Server 203 auf. Die Zentrale sendet die Aktualisierungsdaten über die Übertragungsstrecke 206 an den Satelliten 205. Der Satellit 205 überträgt die Positionsdaten über die Übertragungsstrecke 207 in einem Hauptübertragungskanal 209 an den Empfänger 208, bei dem es sich um ein Fahrzeug handelt. Parallel zu den Positionsdaten werden (ebenfalls über die Übertragungsstrecke 207) in einem Subkanal 210 die Aktualisierungsdaten von der Zentrale 200 übertragen.

In anderen Worten ist also in dem Hauptdatenstrom ein Subkanal für die Aktualisierung von Karteninformationen im engeren Sinne integriert. Die vollwertigen Kartendaten werden in einem hochkomprimierten Format versendet. Die Übertragung der Daten kann aufgrund der limitierten Bandbreite tage- oder sogar wochenlang dauern, weshalb die entsprechenden Empfangsgeräte 100 auch im Standby-Betrieb diesen Datenstrom mithören können. Auf diese Art können nicht nur die bereits genannten Verkehrsereignisse, sondern auch wichtige, längerfristig bekannte Änderungen, z. B. am Straßenverlauf oder an den Straßeneigenschaften (Gefahrenstellen, Geschwindigkeitsbeschränkungen, Anzahl der Fahrspuren, ...), übertragen werden. Besonders diese Straßeneigenschaften lassen sich in einem kompakten Format übertragen und deswegen stellt deren Übertragung eine interessante Option dar.

Falls nötig können diese Informationen auch nur regional ausgestrahlt werden. In diesem Fall werden für die Ausstrahlung nur die Satelliten verwendet, die sich über dem betroffenen Gebiet befinden bzw. in dem betroffenen Gebiet empfangen werden können.

Beispielsweise können mit den Aktualisierungsdaten dynamische POIs versendet werden. Die dynamischen POIs markieren z. B. Anfang und Ende von Änderungen der zentralen Karte. In entsprechenden Attributen zu den POIs werden die Änderungen gespeichert. Die Attribute bilden dazu auch Informationen ab, wie z. B. die Länge einer Baustelle oder den Verlauf einer neuen Streckenführung. Durch die Verwendung von dynamischen POIs für die Aktualisierung von digitalen Karten ist es nicht immer notwendig, große Änderungen an der Software durchzuführen. Durch diese dynamischen POIs sind außerdem noch weitere Funktionen möglich, wie z. B. die Einblendung eines Warnhinweises vor einer eingestürzten Brücke oder einem Tsunami.

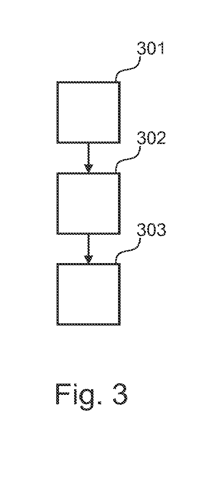

Fig. 3 zeigt ein Flussdiagramm eines Verfahrens gemäß einem Ausführungsbeispiel der Erfindung. In Schritt 301 werden Aktualisierungsdaten von einer Zentrale an einen Galileo-Satelliten gesendet. In Schritt 302 werden die Aktualisierungsdaten parallel zu den Positionsdaten von dem Satelliten an die entsprechenden Empfänger versendet. Bei den Aktualisierungsdaten handelt es sich um sicherheitskritische Kartenupdates bzw. sicherheitskritische dynamische Daten. In Schritt 303 erfolgt eine Aktualisierung der digitalen Kartendaten beim entsprechenden Empfänger.

Die Versendung der Daten erfolgt TMC-ähnlich oder über GPS-Positionierung oder über dynamische POIs. Weiterhin erfolgt die Übertragung der Kartenaktualisierungen kontinuierlich, d. h. über einen größeren Zeitraum.

Ergänzend sei daraufhingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Aktualisierungseinrichtung für ein Aktualisierungssystem eines Fahrzeugs zur Aktualisierung einer digitalen Karte aufweisend:
eine zweite Kommunikationseinheit (115) in dem Fahrzeug zum Empfang von Aktualisierungsdaten von einer ersten Kommunikationseinheit (202) einer Zentrale (200) über einen Datenkanal eines Satellitennavigationssystems; und
eine Aktualisierungseinheit (102) zur Aktualisierung der digitalen Karte auf Basis der empfangenen Aktualisierungsdaten.

2. Aktualisierungseinrichtung nach Anspruch 1, wobei die Aktualisierungseinheit (102) zum ständigen Empfang der Aktualisierungsdaten auch in einem Standby Betrieb ausgeführt ist.

3. Aktualisierungsystem zur Aktualisierung, einer digitalen Karte für ein Fahrzeug, aufweisend:
eine Zentrale (200) mit einer ersten Kommunikationseinheit (202);
eine Aktualisierungseinrichtung (100) nach einem der Ansprüche 1 und 2,
wobei die erste Kommunikationseinheit (202) der Zentrale (200) zur Übermittlung von Aktualisierungsdaten über einen Datenkanal eines Satellitennavigationssystems an die zweite Kommunikationseinheit (115) der Aktualisierungseinrichtung (100) in dem Fahrzeug ausgeführt ist.

4. Aktualisierungssystem eines Fahrzeugs zur Aktualisierung einer digitalen Karte nach Anspruch 3, wobei der für die Übermittlung der Aktualisierungsdaten verwendete Datenkanal ein Subkanal eines Hauptdatenkanals des Satellitennavigationssystems ist.

5. Aktualisierungssystem eines Fahrzeugs zur Aktualisierung einer digitalen Karte nach Anspruch 4, wobei das Satellitennavigationssystem das Satellitennavigationssystem Galileo ist.

6. Aktualisierungssystem eines Fahrzeugs zur Aktualisierung einer digitalen Karte nach einem der Ansprüche 3 bis 5,
wobei es sich bei den Aktualisierungsdaten um sicherheitskritische Daten handelt.

7. Aktualisierungssystem eines Fahrzeugs zur Aktualisierung einer digitalen Karte nach einem der Ansprüche 3 bis 6, wobei es sich bei den Aktualisierungsdaten um dynamische Daten handelt.

8. Aktualisierungssystem eines Fahrzeugs zur Aktualisierung einer digitalen Karte nach einem der Ansprüche 3 bis 7, wobei die Zentrale (200) zur Übermittlung der Aktualisierungsdaten für bestimmte, ausgewählte Zellen ausgeführt ist.

9. Aktualisierungssystem eines Fahrzeugs zur Aktualisierung einer digitalen Karte nach einem der Ansprüche 3 bis 8, wobei die Zentrale (200) zur Übermittlung von Aktualisierungsdaten für ein bestimmtes örtliches Gebiet mittels einer Adressierungsfunktion ausgeführt ist.

10. Aktualisierungssystem eines Fahrzeugs zur Aktualisierung einer digitalen Karte nach Anspruch 9, wobei die Adressierungsfunktion auf einem NMEA-String basiert.

11. Aktualisierungssystem eines Fahrzeugs zur Aktualisierung einer digitalen Karte nach einem der Ansprüche 3 bis 10, wobei die Zentrale (200) zur regionalen Übermittlung der Aktualisierungsdaten über einen bestimmten, ausgewählten Satelliten ausgeführt ist.

12. Aktualisierungssystem eines Fahrzeugs zur Aktualisierung einer digitalen Karte nach einem der Ansprüche 3 bis 11, wobei die Zentrale (200) zur Komprimierung der Aktualisierungsdaten vor der Übermittlung ausgeführt ist.

13. Aktualisierungssystem eines Fahrzeugs zur Aktualisierung einer digitalen Karte nach einem der Ansprüche 3 bis 12, wobei die Zentrale (200) zum andauernden Übermitteln der Aktualisierungsdaten ausgeführt ist.

14. Aktualisierungssystem eines Fahrzeugs zur Aktualisierung einer digitalen Karte nach einem der Ansprüche 3 bis 13 wobei die Aktualisierungsdaten ausgewählt sind aus der Gruppe umfassend sicherheitskritische Information, längerfristig bekannte Änderungen in Straßenverlauf und Straßeneigenschaften.

## Claims

1. Update device for an update system for a vehicle for updating a digital map, having:
a second communication unit (115) in the vehicle for receiving update data from a first communication unit (202) of a control centre (200) via a data channel in a satellite navigation system; and
an update unit (102) for updating the digital map on the basis of the received update data.

2. Update device according to Claim 1,
wherein the update unit (102) is designed to constantly receive the update data even in the standby mode.

3. Update system for updating a digital map for a vehicle, having:
a control centre (200) with a first communication unit (202);
an update device (100) according to either of Claims 1 and 2,
wherein the first communication unit (202) of the control centre (200) is designed to transmit update data via a data channel in a satellite navigation system to the second communication unit (115) of the update device (100) in the vehicle.

4. Update system for a vehicle for updating a digital map according to Claim 3,
wherein the data channel used for transmitting the update data is a subchannel of a main data channel in the satellite navigation system.

5. Update system for a vehicle for updating a digital map according to Claim 4,
wherein the satellite navigation system is the Galileo satellite navigation system.

6. Update system for a vehicle for updating a digital map according to one of Claims 3 to 5,
wherein the update data are safety-critical data.

7. Update system for a vehicle for updating a digital map according to one of Claims 3 to 6,
wherein the update data are dynamic data.

8. Update system for a vehicle for updating a digital map according to one of Claims 3 to 7,
wherein the control centre (200) is designed to transmit the update data for particular, selected cells.

9. Update system for a vehicle for updating a digital map according to one of Claims 3 to 8,
wherein the control centre (200) is designed to transmit update data for a particular local area using an addressing function.

10. Update system for a vehicle for updating a digital map according to Claim 9,
wherein the addressing function is based on an NMEA string.

11. Update system for a vehicle for updating a digital map according to one of Claims 3 to 10,
wherein the control centre (200) is designed to regionally transmit the update data via a particular, selected satellite.

12. Update system for a vehicle for updating a digital map according to one of Claims 3 to 11,
wherein the control centre (200) is designed to compress the update data prior to the transmission.

13. Update system for a vehicle for updating a digital map according to one of Claims 3 to 12,
wherein the control centre (200) is designed to persistently transmit the update data.

14. Update system for a vehicle for updating a digital map according to one of Claims 3 to 13,
wherein the update data are selected from the group comprising safety-critical information, longer-term known changes in road course and road properties.

## Revendications

1. Dispositif de mise à jour pour un système de mise à jour d'un véhicule en vue de mettre à jour une carte numérique, comportant :
une deuxième unité (115) de communication dans le véhicule pour recevoir des données de mise à jour d'une première unité (202) de communication d'une centrale (200) par l'intermédiaire d'un canal de données d'un système de navigation par satellite et
une unité (200) de mise à jour pour la mise à jour de la carte numérique sur la base des données de mise à jour reçues.

2. Dispositif de mise à jour suivant la revendication 1,
dans lequel l'unité (102) de mise à jour est réalisée pour la réception constante des données de mise à jour même dans un mode de fonctionnement en veille.

3. Système de mise à jour pour la mise à jour d'une carte numérique pour un véhicule comportant :
une centrale (200) ayant une première unité (202) de communication,
un dispositif (100) de mise à jour suivant l'une des revendications 1 et 2,
dans lequel la première unité (202) de communication de la centrale (200) est réalisée pour la transmission de données de mise à jour par l'intermédiaire d'un canal de données d'un système de navigation par satellite à la deuxième unité (115) de communication du dispositif (100) dans le véhicule.

4. Système de mise à jour d'un véhicule pour
la mise à jour d'une carte numérique suivant la revendication 3,
dans lequel le canal de données utilisé pour la transmission de données de mise à jour est un sous-canal d'un canal de données principal du système de navigation par satellites.

5. Système de mise à jour d'un véhicule pour
la mise à jour d'une carte numérique suivant la revendication 4,
dans lequel le système de navigation par satellites est le système de navigation par satellites Galiléo.

6. Système de mise à jour suivant l'une des revendications 3 à 5, dans lequel les données de mise à jour sont des données critiques du point de vue de la sécurité.

7. Système de mise à jour suivant l'une des revendications 3 à 6, dans lequel les données de mise à jour sont des données dynamiques.

8. Système de mise à jour suivant l'une des revendications 3 à 7, dans lequel la centrale (200) est réalisée pour la transmission des données de mise à jour pour des cellules sélectionnées définies.

9. Système de mise à jour suivant l'une des revendications 3 à 8, dans lequel la centrale (200) est réalisée pour la transmission de données de mise à jour pour une zone locale définie au moyen d'une fonction d'adressage.

10. Système de mise à jour suivant la revendication 9,
dans lequel la fonction d'adressage repose sur une séquence NMEA.

11. Système de mise à jour suivant l'une des revendications 3 à 10,
dans lequel la centrale (200) est réalisée pour la transmission régionale des données de mise à jour par l'intermédiaire d'un satellite sélectionné défini.

12. Système de mise à jour suivant l'une des revendications 3 à 11,
dans lequel la centrale (200) est réalisée pour la compression des données de mise à jour avant la transmission.

13. Système de mise à jour suivant l'une des revendications 3 à 12,
dans lequel la centrale (200) est réalisée pour la transmission permanente des données de mise à jour.

14. Système de mise à jour suivant l'une des revendications 3 à 13,
dans lequel les données de mise à jour sont sélectionnées dans le groupe comprenant une information critique du point de vue de la sécurité, des modifications connues à long terme du tracé des routes et des propriétés des routes.
